# EUROPÄISCHE PATENTSCHRIFT

(11) **EP 3 325 120 B1**
(45) Veröffentlichungstag und Bekanntmachung des Hinweises auf die Patenterteilung: **31.07.2019**
(21) Anmeldenummer: 16790265.9
(22) Anmeldetag: 26.10.2016
(51) Int. Cl.: B01D 3/14, B01D 3/32

(54) **KOLONNE MIT MINDESTENS EINER TRENNWAND**
COLUMN COMPRISING AT LEAST ONE SEPARATING WALL
COLONNE COMPORTANT AU MOINS UNE PAROI DE SÉPARATION

(30) Priorität: 16.11.2015 DE 102015014708
(43) Veröffentlichungstag der Anmeldung: 30.05.2018
(73) Patentinhaber: JULIUS MONTZ GmbH, D-40723 Hilden (DE)
(72) Erfinder: JANSEN, Helmut, 41542 Dormagen (DE); RIETFORT, Thomas, 46236 Bottrop (DE); ZICH, Egon, 42799 Leichlingen (DE)
(74) Vertreter: Cohausz Hannig Borkowski Wißgott
(86) Internationale Anmeldenummer: PCT/EP2016/001779
(87) Internationale Veröffentlichungsnummer: WO 2017/084734

(56) Entgegenhaltungen:
- EP-A1- 1 088 577
- EP-A1- 1 390 111
- US-A1- 2013 267 751
- US-A1- 2014 005 458

## Beschreibung

Die Erfindung betrifft eine Kolonne zum Durchführen thermischer Trennungen und/oder chemischer Reaktionen mit einer senkrechten zylindrischen Kolonnenaußenwand, die einen Innenraum umgibt, der durch mindestens eine senkrechte Trennwand in Räume unterteilt ist.

Bei der Auftrennung von Zulaufstoffgemischen in mehr als zwei Fraktionen werden häufig, um den apparativen Aufwand begrenzt zu halten, Kolonnen mit dampfförmigen oder flüssigen Seitenabzügen eingesetzt. Die abgezogenen Seitenprodukte sind in der Regel nie völlig rein, d. h. diese Produkte sind meist verunreinigt mit anderen, nicht gänzlich abtrennbaren Stoffen. Um Seitenprodukte in reiner Form zu erhalten, werden Trennwandkolonnen eingesetzt.

Es ist bekannt, in einer Kolonne Trennwände einzusetzen, um damit den Innenraum der Kolonne in Teilbereiche zu unterteilen. So ist es aus der EP 1088577 A1 und EP 1390111 B1 bekannt, in einem Teilbereich von Destillationskolonnen, unterhalb und/oder oberhalb der Zulaufstelle des zu trennenden Stoffgemisches und der Seitenentnahme, Trenneinrichtungen zur Verhinderung einer Quermischung von Flüssigkeits- und/oder Brüdenstrom anzubringen. Diese Trennwände teilen das Innere der Kolonne in ein Zulaufteil, in dem das zu trennende Stoffgemisch eintritt, und ein Entnahmeteil, von dem aus in ein oder mehrere Seitenabzüge abgehen. Durch diese Einbauten soll verhindert werden, dass leicht- und hochsiedende Komponenten vom Zulaufteil in den Entnahmeteil kommen können. In der praktischen Anwendung der oben genannten Erfindungen hat sich gezeigt, dass beim Auftreten eines Überdrucks auf der Zulaufseite Gas und Flüssigkeit durch die Trennwandabdichtung auf die Abzugsseite gelangen kann.

Auch bei sehr hohen Produktreinheitsforderungen im Seitenabzug (Verunreinigungen im ppm-Bereich) erreichen die bekannten Kolonnen nicht die gewünschte Reinheit.

Aufgabe der Erfindung ist es, eine konstruktive Ausgestaltung der Trennwand zu erreichen, die den Einbau der Trennwand in die Kolonne vereinfacht, preiswert gestaltet, durch den Verzicht auf zusätzliche Maschinen, die das Verletzungsrisiko für die Einbauenden senkt und die eine sehr hohe Dichtigkeit zwischen den Kolonnenteilräumen und zwischen Kolonneninnenwand und Trennwand gewährleistet.

Diese Aufgabe wird erfindungsgemäß dadurch gelöst,
- dass die Trennwand mindestens zwei in derselben Ebene übereinander angeordnete senkrechte, auf Stoß aneinander angrenzende Trennwandelemente aufweist, deren senkrechte Vorder- und/oder Rückseiten miteinander fluchten,
- dass die Trennwandelemente durch mindestens eine Schraubverbindung miteinander verbunden sind und hierzu an beide Trennwandelementen nahe der Stoßstelle an den Seitenflächen Bolzen waagerecht vorstehen, auf denen mindestens ein Blechstreifen derart befestigt ist, dass der Blechstreifen die Stoßstelle abdichtend überbrückt,
- dass die Bolzen jeweils ein Außengewinde aufweisen, auf denen Muttern zum Befestigen des Blechstreifens aufgeschraubt sind,
- dass auf der der Schraubverbindung gegenüberliegenden Rückseite des Trennwandelements ein senkrechter Blechstreifen waagerecht befestigt ist, der die obere waagerechte Kante des einen Trennwandelements überragt und in einem Zwischenraum formschlüssig einliegt, der von einem weiteren senkrechten Blechstreifen gebildet ist, der auf der Rückseite des anderen Trennwandelements waagerecht befestigt ist.

Die mit der Erfindung erzielten Vorteile bestehen insbesondere darin, dass eine Trennwand erzeugt werden kann, die aus mehreren Trennwandelementen zusammengesetzt ist. Die Trennwand ist somit individuell an die Größe der Kolonne anpassbar. Der Einbau der Trennwand in die Kolonne ist einfach. Die einzelnen Trennwandelemente sind aufgrund ihrer Abmessungen relativ leicht. Die Trennwand kann deshalb ausschließlich durch menschliche Arbeitskraft zusammengesetzt werden, ohne den Einsatz zusätzlicher Maschinen, wodurch erhebliche Kosten eingespart werden und das Verletzungsrisiko für die einbauenden Arbeiter deutlich herabgesetzt ist.

Durch diese Art des Zusammenbauens der Trennwand wird ebenfalls vermieden, dass es zu Beschädigungen an der Trennwand oder an der Kolonne, insbesondere an der Kolonneninnenwand kommt. Das leichte Gewicht und die im Vergleich zum Kolonneninnendurchmesser kleinere Abmessung der einzelnen Trennwandelemente ermöglichen einen Einbau, ohne ein Verkanten oder Anecken, wodurch Beschädigungen verhindert werden. Weiterhin kann durch die individuelle Anpassung eine bessere Dichtigkeit zwischen Kolonnen-Innenwand und Trennwand erreicht werden. Ebenfalls vorteilhaft ist, dass die einzelnen Trennwandelemente unterschiedliche Breiten und Höhen aufweisen können, wodurch beim Zusammenfügen jede beliebige Breite oder Höhe der Trennwand erreicht werden kann.

Die Schraubverbindung ermöglicht ein leichtes Zusammenfügen der einzelnen Trennwandelemente. Dadurch, dass die Trennwandelemente durch mindestens eine Schraubverbindung verbunden sind, ist ein fester, sicherer Halt zwischen den einzelnen Trennwandelementen gewährleistet.

Aufgrund von Versuchen konnte gezeigt werden, dass durch die neue mehrteilig verschraubte Trennwand die Leckagerate Gas von 3 Vol% auf <0,001 Vol% und die Leckagerate Flüssigkeit von 2,8 auf Null Vol% bezogen auf die Gas- und Flüssigkeitsbelastung der Trenwandsektion verringert werden konnte.

Um dies zu erreichen, wird die Trennstelle der mehrteiligen Trennbleche wie folgt aufgeführt:
- Stoß an Stoß verbaut
- Dichtung und Druckplatte oder Blechstreifen über dem Stoß
- Befestigung mit Pecobolzen / keine Öffnung im Blech
- Durchgehende glatte Dichtfläche für die Befestigung an der Kolonnen-Klemmleiste
- Ausführung auch möglich bei mehreren parallelen Trennwänden

Besonders vorteilhaft ist es, wenn auf der der Schraubverbindung gegenüberliegenden Rückseite des Trennwandelements ein senkrechter Blechstreifen waagerecht befestigt ist, der die obere waagerechte Kante des einen Trennwandelements überragt und in einem Zwischenraum formschlüssig einliegt, der von einem weiteren senkrechten Blechstreifen gebildet ist, der auf der Rückseite des anderen Trennwandelements waagerecht befestigt ist. Hierdurch wird die Montage der Trennwandelemente wesentlich erleichtert. Es ist eine zusätzliche Führung der Trennwandelemente aneinander gegeben während des Zusammensteckens vor dem Verschrauben insbesondere bei großen Kolonnendurchmessern. Auch ist die Stabilität der Trennwand während und nach der Montage erhöht.

Vorteilhafte Ausgestaltungen der Erfindung sind in den weiteren Unteransprüchen aufgeführt.

Ausführungsbeispiele der Erfindung sind in den Zeichnungen dargestellt und werden im Folgenden näher beschrieben. Es zeigen
- Fig. 1: einen senkrechten Schnitt durch eine senkrechte Trennwand mit zwei übereinanderstehenden Trennwandelementen,
- Fig. 2: einen waagerechten Schnitt durch die Befestigungsstelle einer Trennwand an die Kolonnenaußenwand.

Um eine Kolonne mit zylindrischer Außenwand 1 aus Blech in mindestens zwei Teilbereiche zu unterteilen, wird eine senkrechte Trennwand 2 eingesetzt, die zumindest zwei übereinanderstehende angeordnete senkrechte Trennwandelemente 2a, 2b aufweist, die miteinander fluchten, wobei das Trennwandelement 2a auf dem Trennwandelement 2b auf Stoß steht, ohne einen Spalt zu bilden. Hierbei ist von Bedeutung, dass die waagerechte Unterseite des oberen Trennwandelementes 2a auf der waagerechten Oberseite des unteren Trennwandelementes 2b auf Stoß steht, und dass an beide Trennwandelementen 2a, 2b nahe der Stoßstelle an den Seitenflächen befestigte Bolzen 19 waagerecht vorstehen, auf denen mindestens ein Blechstreifen 17 derart befestigt ist, dass der Blechstreifen 17 als Abdeckstreifen die Stoßstelle abdichtend überbrückt. Das gleiche gilt, wenn zwei Trennwandelemente und mit ihren senkrechten Rändern/Seiten auf Stoß stehen, so dass dazwischen im Wesentlichen kein Spalt besteht.

Die den Blechstreifen 17 durchdringenden Bolzen 19 weisen jeweils ein Außengewinde auf, auf denen Muttern 20 geschraubt sind, durch die der Blechstreifen 17 bzw. ein Druckband 17 auf die Verbindungsstelle (Stoßbereich) zwischen den Trennwandelementen 2a, 2b gedrückt wird. Hierbei liegt unter dem Blechstreifen /Druckband 17 ein Dichtstreifen 18 vorzugsweise aus Polytetrafluorethylen (PTFE) oder aus Graphit.

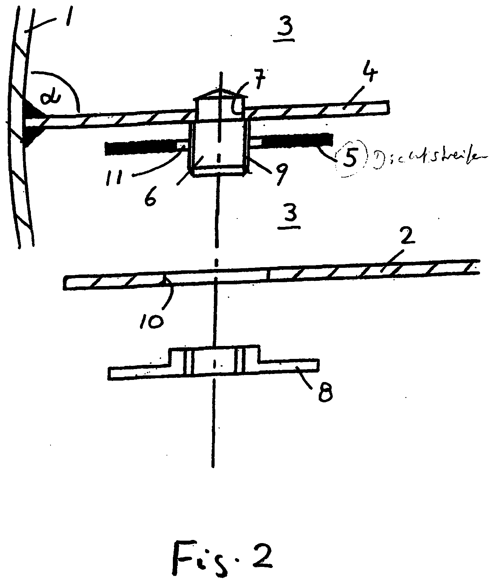

Auf der Rückseite der Trennwand (d. h. auf der Wandseite, auf der keine Bolzen 19 vorstehen) sind senkrechte Blechstreifen 21, 24 waagerecht und damit parallel zur oberen waagerechten Kante 22 befestigt. Hierbei ist auf der Rückseite des unteren Trennwandelements 2b der Blechstreifen 21 auf die Rückseite geschweißt oder aufgeklebt, so dass der untere Bereich des Blechstreifens 21 auf der Trennwandelementenrückseite aufliegt und der obere Bereich über die obere Kante (oberen waagerechten Rand) 22 senkrecht vorsteht. Dieser senkrecht vorstehende Bereich liegt in einem Zwischenraum 23 ein, der von einem weiteren senkrechten Blechstreifen 24 gebildet ist, der mit seinem oberen Bereich an der Rückseite des oberen Trennwandelements 2a angeschweißt oder angeklebt ist und mit seinem unteren Bereich einen Abstand zur Trennwandelementenrückseite aufweist, um den Zwischenraum 23 zu bilden. Um eine Trennwand 2 in der Kolonne zu befestigen, ist, wie in Fig. 2 dargestellt, auf einander gegenüberliegenden Seiten an der Innenseite der Kolonnenaußenwand 1 jeweils ein Blechstreifen 4 angeschweißt, wobei der Blechstreifen in seiner Längserstreckung senkrecht verläuft und von der Innenseite der Kolonnenaußenwand 1 im Wesentlichen rechtwinklig absteht. Dieser Winkel α ist dann 90 Grad, wenn die Trennwand 2 den Kolonneninnenraum in zwei gleich große Räume teilt. Ist dagegen der Innenraum 3 der Kolonne durch zwei oder mehr Trennwände in drei oder mehr Räume aufgeteilt, so weicht der Winkel α oft von 90 Grad ab.

Die jeweilige Trennwand 2 ist als Blech an ihrem senkrechten Rand am Blechstreifen 4 angeschraubt. Hierzu sind am Blechstreifen 4 untereinander in regelmäßigen Abständen Bolzen 6 befestigt. Hierbei weist der Bolzen 6 ein Außengewinde 9 auf und erstreckt sich durch eine Öffnung 10 der Trennwand 2, so dass auf dem äußeren Ende des Bolzens 6 eine Mutter 8 aufgeschraubt wird, um die Trennwand 2 sicher am Blechstreifen 4 abgedichtet zu halten. Die Dichtsicherheit kann noch dadurch erhöht werden, dass zwischen der Trennwand 2 und dem Blechstreifen 4 ein Dichtungsstreifen 5 eingelegt ist, der sich über die gesamte Länge des Blechstreifens 4 und der Höhe der Trennwand 2 erstreckt und Öffnungen 22 in Höhe der Bolzen besitzt, damit diese durch die Öffnungen hindurchtreten können. Der Dichtungsstreifen 5 besteht vorzugsweise aus Polytetrafluorethylen oder aus Graphit.

Zum Befestigen der Bolzen 6 am Blechstreifen 4 werden die folgenden unterschiedlichen Befestigungsarten vorgeschlagen:
Zum einen können die Bolzen 6 durch Widerstandsschweißen am Blechstreifen 4 angeschweißt werden, so dass es nicht erforderlich ist, Öffnungen im Blechstreifen 4 einzubringen. Alternativ kann der Blechstreifen 4 Bohrungen 7 mit Innengewinde aufweisen, in denen der Bolzen 6 mit einem Außengewinde Halt findet. Ferner kann aber auch der Bolzen am Blechstreifen in dessen Bohrung 7 eingeschweißt sein.

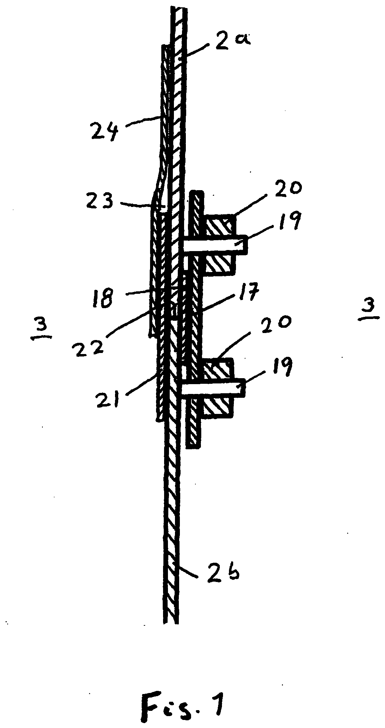

In Fig. 1 und ist nur eine Trennwand 2 dargestellt. Stattdessen kann der Kolonneninnenraum 3 aber auch durch zwei oder mehr Trennwände 2 in drei oder mehr Teilräume unterteilt sein, wobei die Trennwände zueinander parallel verlaufen. Vorzugsweise besteht jede Trennwand 2 aus zwei oder mehr Teilen, die jeweils aneinander durch Dichtungsbleche miteinander insbesondere über Schraubverbindungen verbunden sind, so dass die einzelnen Trennwandteile als einzelne Bleche durch das Mannloch der Kolonne in das Innere leicht eingebracht werden können.

## Patentansprüche

1. Kolonne zum Durchführen thermischer Trennungen und/oder chemischer Reaktionen mit einer senkrechten zylindrischen Kolonnenaußenwand (1), die einen Innenraum umgibt, der durch mindestens eine senkrechte Trennwand (2) in Räume (3) unterteilt ist, **dadurch gekennzeichnet,**
- **dass** die Trennwand (2) mindestens zwei in derselben Ebene übereinander angeordnete senkrechte, auf Stoß aneinander angrenzende Trennwandelemente (2a, 2b) aufweist, deren senkrechte Vorder- und/oder Rückseiten miteinander fluchten,
- **dass** die Trennwandelemente (2a, 2b) durch mindestens eine Schraubverbindung (19, 20) miteinander verbunden sind und hierzu an beide Trennwandelementen (2a, 2b) nahe der Stoßstelle an den Seitenflächen Bolzen (19) waagerecht vorstehen, auf denen mindestens ein Blechstreifen (17) derart befestigt ist, dass der Blechstreifen (17) die Stoßstelle abdichtend überbrückt,
- **dass** die Bolzen (19) jeweils ein Außengewinde aufweisen, auf denen Muttern (20) zum Befestigen des Blechstreifens (17) aufgeschraubt sind,
- **dass** auf der der Schraubverbindung (19, 20) gegenüberliegenden Rückseite des Trennwandelements (2b) ein senkrechter Blechstreifen (21) waagerecht befestigt ist, der die obere waagerechte Kante (22) des einen Trennwandelements (2b) überragt und in einem Zwischenraum (23) formschlüssig einliegt, der von einem weiteren senkrechten Blechstreifen (24) gebildet ist, der auf der Rückseite des anderen Trennwandelements (2a) waagerecht befestigt ist.

2. Kolonne nach Anspruch 1, **dadurch gekennzeichnet, dass** zwischen den Trennwandelementen (2a, 2b) und dem Blechstreifen (17) ein Dichtstreifen (18) liegt, der die Stoßstelle überdeckt.

3. Kolonne nach einem der Ansprüche 1 oder 2, **dadurch gekennzeichnet, dass** die Trennwand (2) auf einander gegenüberliegenden Seiten auf der Innenseite der Außenwand (1) befestigt ist, wobei an beiden Wand-Befestigungsstellen auf der Innenseite der Kolonnenaußenwand (1) jeweils ein Blechstreifen (4) als Befestigungsleiste derart angeschweißt ist, dass er in seiner Längserstreckung senkrecht verläuft und von der Innenseite der Kolonnenaußenwand im Wesentlichen rechtwinklig absteht, und dass an jedem Blechstreifen (4) jeweils der senkrechte Außenrand der Trennwand (2) abgedichtet angeschraubt ist.

4. Kolonne nach Anspruch 3, **dadurch gekennzeichnet, dass** zwischen dem Blechstreifen (4) und dem Rand der Trennwand (2) ein Dichtstreifen (5) liegt.

5. Kolonne nach einem der Ansprüche 2 bis 4, **dadurch gekennzeichnet, dass** der Dichtstreifen (5, 18) aus Polytetrafluorethylen (PTFE) oder aus Graphit besteht.

6. Kolonne nach einem der Ansprüche 3 bis 5, **dadurch gekennzeichnet, dass** an dem Blechstreifen (4) Außengewinde aufweisende Bolzen (6) eingeschweißt oder angeschweißt sind.

7. Kolonne nach einem der vorherigen Ansprüche, **dadurch gekennzeichnet, dass** die Bolzen (6, 19) durch Widerstandsschweißen am Blechstreifen (4, 17) angeschweißt sind.

8. Kolonne nach einem der vorherigen Ansprüche, **dadurch gekennzeichnet, dass** der Kolonneninnenraum (3) durch zwei oder mehr Trennwände (2) in drei oder mehr Teilräume unterteilt ist.

## Claims

1. Column for carrying out thermal separations and/or chemical reactions comprising a vertical cylindrical column outer wall (1) enclosing an inner chamber which is subdivided into chambers (3) by at least one vertical partition (2), **characterized**
- **in that** the partition (2) comprises at least two vertical partition elements (2a, 2b) which are arranged one above the other in the same plane, adjoin one another in abutting manner and the vertical front and/or rear sides of which are aligned with one another,
- **in that** the partition elements (2a, 2b) are connected together by at least one screw fastening (19, 20) and for this purpose studs (19) close to the abutment point on the side faces on both partition elements (2a, 2b) project out horizontally, onto which studs at least one metal strip (17) is fastened in such a manner that the metal strip (17) bridges the abutment point in a sealing manner,
- **in that** the studs (19) each comprise an external thread, onto which are screwed nuts (20) for fastening the metal strip (17),
- **in that** a vertical metal strip (21) is fastened horizontally on the opposite rear side of the partition element (2b) to the screw fastening (19, 20), which metal strip projects beyond the upper horizontal edge (22) of the one partition element (2b) and is located interlockingly in an interspace (23) which is formed by a further vertical metal strip (24) which is fastened horizontally to the rear side of the other partition element (2a).

2. Column according to Claim 1, **characterized in that** a sealing strip (18) which covers the abutment point is located between the partition elements (2a, 2b) and the metal strip (17).

3. Column according to either of Claims 1 and 2, **characterized in that** the partition (2) is fastened to mutually opposing sides on the inner side of the outer wall (1), wherein at both wall fastening points a metal strip (4) is welded as a fastening bar to the inner side of the column outer wall (1) in such a manner that it extends vertically in the longitudinal extent thereof and projects out substantially at right angles from the inner side of the column outer wall, and **in that** the vertical outer edge of the partition (2) is in each case screwed in a sealed manner to each metal strip (4).

4. Column according to Claim 3, **characterized in that** a sealing strip (5) is located between the metal strip (4) and the edge of the partition (2).

5. Column according to one of Claims 2 to 4, **characterized in that** the sealing strip (5, 18) consists of polytetrafluoroethylene (PTFE) or graphite.

6. Column according to one of Claims 3 to 5, **characterized in that** studs (6) comprising an external thread are welded into or onto the metal strip (4) .

7. Column according to one of the preceding claims, **characterized in that** the studs (6, 19) are welded to the metal strip (4, 17) by resistance welding.

8. Column according to one of the preceding claims, **characterized in that** the column inner chamber (3) is subdivided into three or more subchambers by two or more partitions (2).

## Revendications

1. Colonne pour réaliser des séparations thermiques et/ou des réactions chimiques avec une paroi extérieure de colonne cylindrique verticale (1) qui entoure un espace interne qui est divisé par au moins une paroi de séparation verticale (2) en espaces (3), **caractérisée en ce que**
- la paroi de séparation (2) présente au moins deux éléments de paroi de séparation verticaux (2a, 2b) adjacents l'un à l'autre bout à bout, disposés l'un au-dessus de l'autre dans le même plan, dont les côtés avant et/ou arrière verticaux sont alignés l'un avec l'autre,
- les éléments de paroi de séparation (2a, 2b) sont connectés l'un à l'autre par au moins une connexion vissée (19, 20) et à cet effet, au niveau des deux éléments de paroi de séparation (2a, 2b) à proximité de la zone d'aboutement au niveau des surfaces latérales, des boulons (19) font saillie horizontalement, sur lesquels est fixée au moins une bande de tôle (17) de telle sorte que la bande de tôle (17) surmonte la zone d'aboutement de manière hermétique,
- les boulons (19) présentent chacun un filetage extérieur sur lequel sont vissés des écrous (20) pour la fixation de la bande de tôle (17),
- une bande de tôle verticale (21) est fixée horizontalement sur le côté arrière de l'élément de paroi de séparation (2b) opposé à la connexion vissée (19, 20), laquelle dépasse au-delà de l'arête supérieure horizontale (22) de l'un des éléments de paroi de séparation (2b) et s'insère par engagement par correspondance de formes dans un espace intermédiaire (23) qui est formé par une bande de tôle verticale supplémentaire (24) qui est fixée horizontalement du côté arrière de l'autre élément de paroi de séparation (2a).

2. Colonne selon la revendication 1, **caractérisée en ce qu'**entre les éléments de paroi de séparation (2a, 2b) et la bande de tôle (17) est située une bande d'étanchéité (18) qui recouvre la zone d'aboutement.

3. Colonne selon l'une quelconque des revendications 1 ou 2, **caractérisée en ce que** la paroi de séparation (2) est fixée sur des côtés mutuellement opposés sur le côté intérieur de la paroi extérieure (1), une bande de tôle (4) étant à chaque fois soudée en tant que baguette de fixation au niveau des deux zones de fixation de la paroi sur le côté intérieur de la paroi extérieure de colonne (1), de telle sorte qu'elle s'étende verticalement dans son étendue longitudinale et fasse saillie essentiellement à angle droit depuis le côté intérieur de la paroi extérieure de colonne, et **en ce que** le bord extérieur vertical de la paroi de séparation (2) est vissé de manière hermétique à chaque fois à chaque bande de tôle (4).

4. Colonne selon la revendication 3, **caractérisée en ce qu'**une bande d'étanchéité (5) est située entre la bande de tôle (4) et le bord de la paroi de séparation (2).

5. Colonne selon l'une quelconque des revendications 2 à 4, **caractérisée en ce que** la bande d'étanchéité (5, 18) se compose de polytétrafluoroéthylène (PTFE) ou de graphite.

6. Colonne selon l'une quelconque des revendications 3 à 5, **caractérisée en ce que** des boulons (6) présentant des filetages extérieurs sont soudés dans ou sur la bande de tôle (4).

7. Colonne selon l'une quelconque des revendications précédentes, **caractérisée en ce que** les boulons (6, 19) sont soudés par soudage à résistance sur la bande de tôle (4, 17).

8. Colonne selon l'une quelconque des revendications précédentes, **caractérisée en ce que** l'espace interne de colonne (3) est divisé en deux ou plus de deux espaces partiels par deux ou plus de deux parois de séparation (2).
